(19) Europäisches Patentamt
European Patent Office
Office européen des brevets

(11) Veröffentlichungsnummer : **0 490 328 B1**


(12) **EUROPÄISCHE PATENTSCHRIFT**


(45) Veröffentlichungstag der Patentschrift : **13.04.94 Patentblatt 94/15**

(51) Int. Cl.[5] : **B23D 45/08,** B23D 21/04, B23C 3/06

(21) Anmeldenummer : **91121121.7**

(22) Anmeldetag : **10.12.91**


(54) **Verfahren zur Bearbeitung von Rundmaterial oder dergleichen im Wirbelverfahren.**


(30) Priorität : **14.12.90 DE 4040057**

(43) Veröffentlichungstag der Anmeldung : **17.06.92 Patentblatt 92/25**

(45) Bekanntmachung des Hinweises auf die Patenterteilung : **13.04.94 Patentblatt 94/15**

(84) Benannte Vertragsstaaten : **AT DE FR GB IT**

(56) Entgegenhaltungen :
**EP-A- 0 084 379**
**DD-A- 207 873**
**DE-A- 3 215 385**
**FR-A- 2 557 823**



(73) Patentinhaber : **Maschinenfabrik Ravensburg AG**
**Georgstrasse 24**
**D-88212 Ravensburg (DE)**

(72) Erfinder : **Nussbaumer, Walter**
**Allgäustrasse 13**
**W-7980 Ravensburg (DE)**
Erfinder : **Beyrer, Karl-Heinz**
**Dürerweg 45**
**W-7987 Weingarten (DE)**
Erfinder : **Mark, Josef**
**Ruper-Mayer-Strasse 2**
**W-7980 Ravensburg (DE)**

(74) Vertreter : **Patentanwälte Dipl.-Ing. E. Eisele**
**Dr.-Ing. H. Otten**
**Seestrasse 42**
**D-88214 Ravensburg (DE)**


**EP 0 490 328 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Bearbeitung von Rundmaterial oder dergleichen im Wirbelverfahren nach dem Oberbegriff des Anspruchs 1.

Stand der Technik:

Das Wirbelverfahren ist insbesondere vom Gewindewirbeln bekannt geworden (Z: Technische Rundschau Nr. 40/73 vom 14.09.73; Sonderdruck S. 1 bis 16; Lueger, Lexikon der Technik, Band 31, S. 360 ff.). Beim Wirbelverfahren handelt es sich um ein spanabhebendes Fertigungsverfahren, bei welchem das Werkzeug das Werkstück spiralwirbelartig umkreist. Die Einschnittiefe wird durch ein oder mehrere, mit hoher Schnittgeschwindigkeit umlaufende Messer in einem Arbeitsgang hergestellt. Dabei wälzt sich die durch das Schneidwerkzeug gebildete Innenmantelfläche mit dem sogenannten Flugkreisdurchmesser auf der zylindrischen Außenmantelfläche des zu bearbeitenden Werkzeugs ab. Dieser Bewegungsvorgang wird der sich ständig kreisenden Bewegung des Schneidwerkzeugs überlagert.

Das Wirbelverfahren ist weitgehend zur Herstellung von Gewindetypen aller Art bekannt geworden. Es zeichnet sich insbesondere durch hohe Schnittgeschwindigkeiten mit mehreren Messern bzw. Schneidstählen aus, wobei die Arbeitsweise des Wirbelkopfes einem Fräsvorgang (Wirbelfräsverfahren) mit einem umlaufenden Drehstahl entspricht. Die Kreisbahn des schnell umlaufenden Werkzeuges ist dabei zum Querschnitt des beispielsweise außen zu bearbeitenden Werkstücks exzentrisch verschoben, wobei der Flugkreismittelpunkt ebenfalls auf einer Kreisbahn rotiert.

Das Wirbelverfahren hat den Vorteil, daß eine Vielzahl von Schneidwerkzeugen, insbesondere Schneidstählen, nebeneinander angeordnet werden können, die über einen größeren Segmentbereich gleichzeitig in Eingriff mit dem Werkstück stehen. Die Bearbeitungstiefe in das Werkstück wird jedoch durch die maximal mögliche Einstechtiefe der einzelnen Stähle bzw. Messer bestimmt. Dies ist aufgrund der Formgebung der Stähle bzw. Messer im allgemeinen auf ein geringes Einstechmaß begrenzt. Insbesondere ist ein Durchtrennen von Rundmaterialien oder dickwandigen Rohren mit herkömmlichen Wirbelgeräten nicht möglich. Weiterhin ist der technische Installationsaufwand für die Vielzahl von Schneidstählen beträchtlich.

Das Abtrennen eines Rundmaterials, wie z. B. eines Rohres oder ein Vollmaterial, geschieht im allgemeinen durch Sägen, wobei man zwischen Kreissägeblätter und Linearsägeblätter unterscheidet. Bei der Verwendung von Kreissägen mit Außenverzahnung ist es nachteilig, daß beim Zusammentreffen der kreisförmigen Säge mit dem kreisförmigen Rundmaterial zunächst eine schlagartige Belastung auf einen Zahn oder nur wenige Zähne erfolgt. Im ersten Augenblick berühren sich Kreissägeblatt und Rundmaterial lediglich in einem Punkt, was zu einer hohen Zahnbelastung führt. Beim Eindringen des Kreissägeblattes in das Rundmaterial treten nur allmählich mehr und mehr Zähne in Eingriff, wodurch erst eine verminderte Zahnbelastung erfolgt. Dadurch, daß sich die Zähne am äußersten Rand des Kreissägeblatts befinden, dessen Durchmesser auch durch die Dicke des zu sägenden Rundmaterials bestimmt wird, können starke Schwingungen am Sägeblatt auftreten. Wird mit einem üblichen Kreissägeblatt mit Außenverzahnung ein Rohr durchgesägt, so treten zusätzlich, nachdem die Wandstärke durchtrennt ist, schlagartige Zahnbelastungen beim Eintritt in und beim Austritt aus dem Wandmaterial auf, was bei durchtrennter Wandstärke zweimal erfolgt. Dies führt zu schlagartiger Kreissägeblattbelastung und damit zu einer erhöhten Zahnbelastung mit Schwingungen.

Der wirksame Einstechradius des Kreissägeblattes mit Außenverzahnung muß so groß gewählt werden, daß er das komplette Rundmaterial in seinem Durchmesser durchtrennen kann. Ein im Durchmesser großes Kreissägeblatt neigt jedoch wesentlich stärker zu Schwingungen.

Die zuvor geschilderten Nachteile des Sägens mit einem Kreissägeblatt mit Außenverzahnung gelten sinngemäß auch bei einem linearen Sägeblatt, wie z. B. bei einer Bügelsäge.

Um diese Nachteile zu vermeiden ist aus der DD 207 873 (nächstliegenden Stand der Technik) eine Ringsägemaschine zum Ablängen von Rohren bekanntgeworden, bei welcher ein auf einem Kreuztisch angeordnetes Wirbelsägewerkzeug mit innenliegender Verzahnung verwendet wird. Bei dieser Vorrichtung werden die Vorteile des Wirbelverfahrens auch zum Durchtrennen von Rundmaterialien angewandt, wobei das Wirbelwerkzeug als Kreissägeblatt mit einer Innenverzahnung ausgebildet ist. Setzt man das Wirbelverfahren mit einem innenverzahnten Kreissägeblatt ein, so entfallen die oben genannten Nachteile wenigstens zum Teil. Die Schneidzähne des innenverzahnten Wirbelwerkzeuges können nämlich tangential in das Werkstück eindringen. Wie beim Gewindewirbeln schneidet das innenverzahnte Sägeblatt in das zu bearbeitende Rundmaterial und vollzieht einen ruhigen und schwingungsarmen Lauf. Aufgrund des Wirbelverfahrens braucht der wirksame Eindringradius des Wirbelwerkzeuges nur die Wandstärke des Werkstücks zu umfassen. Handelt es sich hierbei um ein Vollmaterial, so muß das Wirbelwerkzeug nur bis zum Mittelpunkt des Vollmaterials eindringen, da die weitere Hälfte des Werkstücks durch die Umkreisung des Wirbelwerkzeuges auf dem Flugkreisdurchmesser abgetrennt wird. Gegenüber einem konventionellen Kreissägeblatt dringt deshalb ein Wirbelwerkzeug mit einer geringeren Tiefe in das Werkstück ein und der wirksame Schnittdurchmesser liegt wesentlich näher zum Werkzeugmittelpunkt. Dies ergibt einen schwingungsarmen Lauf. Aufgrund der Ausbildung des Wirbelwerkzeugs als Kreissägeblatt mit Innenverzahnung können demnach auch dickwandige Rohre oder ein Vollmaterial ohne weiteres im Wirbelverfahren werkzeugschonend abgetrennt werden, da die Einschnittiefe bei einem solchen Kreissägeblatt wesentlich größer ausführbar ist als dies bei üblichen Wirbelwerkzeugen mit Schneidstählen der Fall ist. Da sich die Materialbearbeitung auch im Inneren des Kreissägeblatts befindet, treten auch weniger Schwingungen auf.

Bei der bekannten Vorrichtung gemäß der DD 207 873 taucht das Wirbelwerkzeug mit ständiger Drehung mit einer zunächst nur linearen Bewegung des Werkzeugmittelpunktes in das Werkstück ein, bis die Wandstärke des zu trennenden Rohres an dieser Stelle durchtrennt ist. Erst danach beginnt der eigentliche Wirbelvorgang mit einer Bewegung des Werkzeugmittelpunktes auf der sog. Flugkreis-Mittelpunktsbahn. Dies hat den Nachteil, daß während des linearen Eintauchens des Werkzeugs in das Werkstück ähnlich negative Verhältnisse herrschen wie beim Sägen mit einer Bügelsäge. Insbesondere variieren auch hier die Schnittlängen stark, was zu einem sehr unterschiedlichen Spanraumvolumen führt. Unterschiedliche Schnittlängen haben auch unterschiedliche Radial- und Tangentialkräfte am Werkzeug zur Folge, was einer Anpassung des Werkzeugs bedarf.

Vorteile der Erfindung:

Das erfindungsgemäße Verfahren betrifft eine Weiterentwicklung des Arbeitsverfahrens gemäß der DD 207 873. Es hat demgegenüber den Vorteil, daß von Beginn an die Werkstückbearbeitung im Wirbelverfahren durchgeführt wird. Der Mittelpunkt des Wirbelwerkzeugs wird hierfür von Beginn an auf einer Bahn oder Kurve geführt, so daß die Durchtrennung z. B. einer Rohrwandung nicht durch einen linearen, sondern einen kurvenartigen Vorschub erfolgt. Diese Kurve wird über eine CNC-Steuerung abgefahren. Durch das sofort einsetzende Wirbelverfahren wird die Schnittlänge des Werkzeugs im Werkstück bereits kurz nach Bearbeitungsbeginn auf einen nahezu gleichbleibenden Wert gebracht, so daß das Spanvolumen optimiert werden kann. Hierdurch können auch die Radial- und Tangentialkräfte am Werkzeug verringert werden, was zu einer Optimierung des Werkzeugs führt.

Weitere Einzelheiten der Erfindung sind in den Zeichnungen dargestellt und unter Angabe weiterer Vorteile in der nachfolgenden Beschreibung der Erfindung näher erläutert. Es zeigen

- Fig. 1 eine Stirnansicht eines Wirbelgerätes,
- Fig. 2 eine Seitenansicht des Wirbelgerätes,
- Fig. 3 ein Wirbelwerkzeug als Kreissägeblatt mit Innenverzahnung in Arbeitsstellung und verschiedenen Varianten und
- Fig. 4a-e den Verfahrensablauf bei der Bearbeitung.

Beschreibung der Erfindung:

Zunächst soll die Vorrichtung zur Durchführung des Verfahrens näher beschrieben werden:

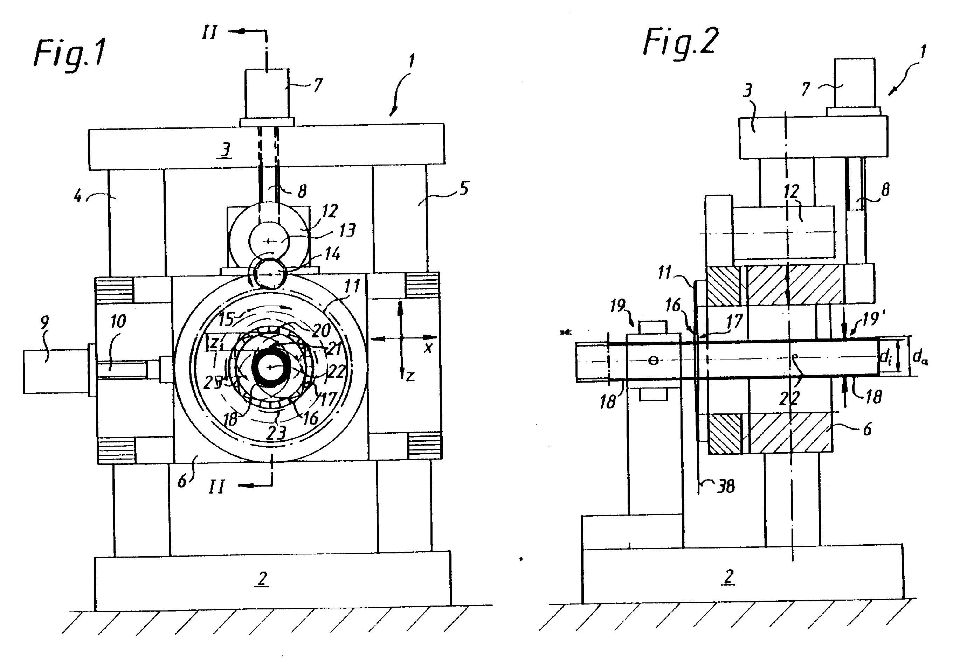

Das in der Fig. 1 in Stirnansicht und in Fig. 2 in Seitenansicht dargestellte Wirbelgerät 1 ist in Portalbauweise aufgebaut. Hierfür sind zwischen einer Grundplatte 2 und einem Oberjoch 3 wenigstens zwei vertikale Säulen 4, 5 angeordnet, auf denen sich ein CNC-gesteuerter Kreuzschlitten in vertikaler Richtung (Z- Achse) bewegt. Die Vorschubbewegung für die Auf- und Abbewegung des Kreuzschlittens 6 erfolgt über einen Vorschubmotor 7 über eine Antriebswelle 8. Der Kreuzschlitten 6 führt neben der Auf- und Abwärtsbewegung eine Bewegung in der X-Achse aus, d. h. eine Bewegung in der Vertikalebene 38. Für diese Horizontal- oder Querbewegung in X-Richtung ist ein weiterer Vorschubmotor 9 mit Antriebswelle 10 vorgesehen.

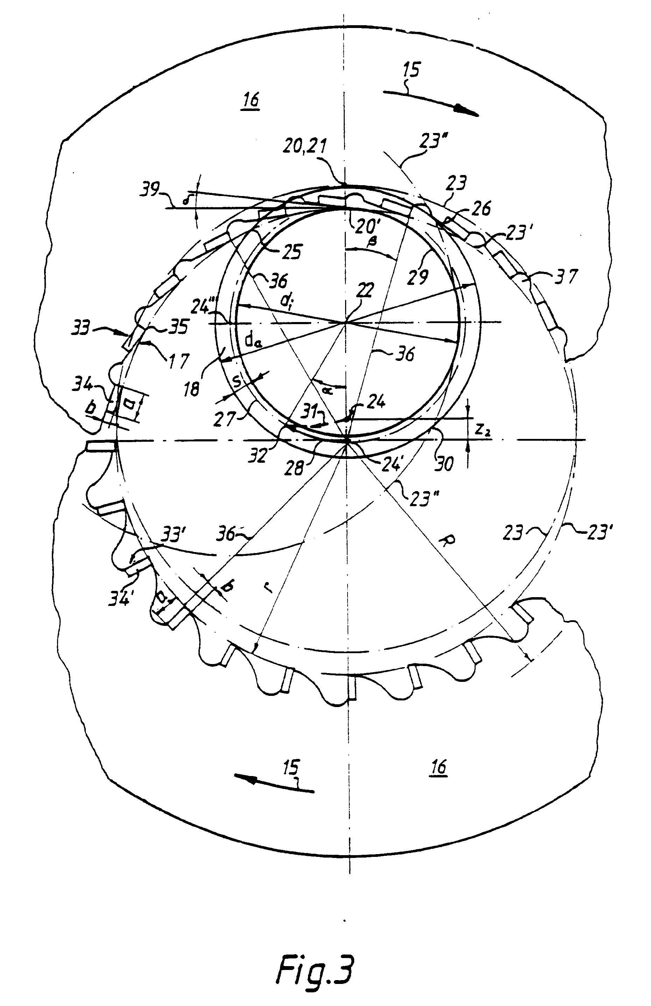

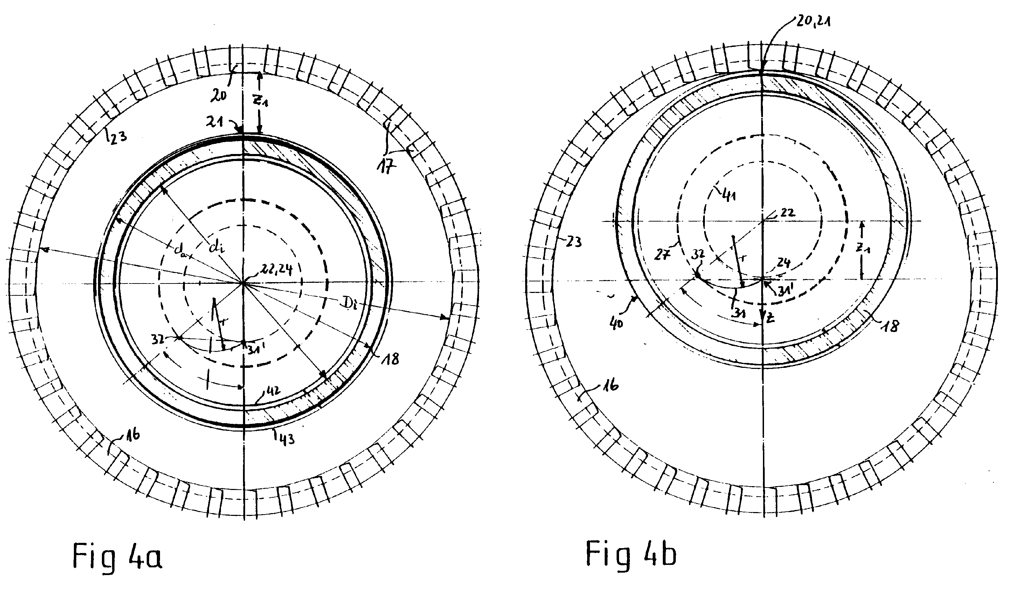

Auf der Vorderseite des Kreuzschlittens 6 befindet sich ein Treibkranz 11, der von einem Motor 12 über ein Zahnrad 13 und einem Zwischenritzel 14 angetrieben wird. Die Rotationsbewegung des Treibkranzes 11 ist mit Pfeil 15 dargestellt. Im Inneren des Treibkranzes 11 ist das Wirbelwerkzeug 16 befestigt, welches als Wirbelfräswerkzeug oder als Kreissägeblatt mit einer in Fig. 1 nur schematisch dargestellten Innenverzahnung 17 ausgerüstet ist. Das Werkstück 18, welches z. B. als dickwandiges Rohr ausgebildet ist, befindet sich zunächst konzentrisch innerhalb des mit der Innenverzahnung 17 versehenen Wirbelwerkzeugs 16 (s. Fig. 4a). Das Wirbelgerät 1 soll gemäß Ausführungsbeispiel das als dickwandiges Rohr 18 ausgebildete Werkstück durchtrennen. Hierfür ist das Rohr 18 über eine Einspannvorrichtung 19 vor dem Wirbelwerkzeug 16 und einer weiteren Einspannvorrichtung 19' im hinteren Bereich des Wirbelgeräts fest eingespannt. Der Innendurchmesser des Rohres 18 ist mit $d_i$, der Außendurchmesser mit $d_a$ bezeichnet (s. Fig. 2, 3).

Aufgrund der Bewegungsmöglichkeit des Kreuzschlittens 6 z. B. in Z-Richtung kann das z. B. als Kreissägeblatt ausgebildete Wirbelwerkzeug mit Innenverzahnung 17 zunächst um den Betrag $z_1$ nach unten gefahren werden (s. Fig. 1, 4a), so daß der jeweils in oberster Stellung befindliche Zahn 20 des Kreissägeblatts den obersten Punkt 21 des Rohres berührt (s. Fig. 4b). Selbstverständlich kann diese Bewegung auch durch jede andere Heranfahrbewegung des Werkzeuges an das Werkstück, d. h. z. B. auch in Querrichtung, erfolgen.

Die Längsmittelachse 22 des Werkstücks 18 bleibt demnach in ihrer Lage unverändert stehen. Lediglich der Mittelpunkt 24 des Wirbelwerkzeugs wird über den Kreuzschlitten 6 zunächst in eine Richtung bewegt, bis sich die gedachte Innenmantelfläche 23 des Werkzeugs 16 mit der Außenmantelfläche 40 des Werkstücks 18 berührt. Dabei wandert der Mittelpunkt 24 des Werkzeugs 16 um den Betrag $z_1$ in Z-Richtung und liegt auf einem Kreis 41 um den Mittelpunkt 22 (s. Fig. 4b). Würde nun das Wirbelwerkzeug 16 mit seinem Flugkreismittelpunkt 24 auf der Flugkreismittelpunktsbahn 41 umlaufen, so würde der Innenhüllkreis 23 lediglich auf dem Außenhüllkreis 40 abrollen, ohne daß das Werkzeug 16 in das Werkstück spanabhebend eindringt (s. Fig. 4b). Das Werkzeug 16 muß deshalb eine weitere Vorschubbewegung in Richtung Werkstück 18 durchführen, wie dies in Fig. 3 mit dem linearen Vorschub $z_2$ zur Durchtrennung der Wandstärke $s = z_2$ des Werkstücks angedeutet ist.

In der in Fig. 3 gezeigten Darstellung wird zunächst das bekannte Wirbelfräsverfahren gezeigt und beschrieben: Hier hat das Wirbelwerkzeug 16 aufgrund einer weiteren, nur linearen Abwärtsbewegung um den Betrag $z_2$ die Wandstärke s des Werkstücks 18 in seinem oberen Bereich bereits durchtrennt. Dabei ist der Mittelpunkt 24 des Wirbelwerkzeugs 16 vom Punkt 24 zum Punkt 24' linear abwärts um die Strecke $z_2$ gewandert. Der oberste Schneidzahn 20 wandert dabei zum Punkt 20'. Die Ausgangslage des Innenhüllkreises ist hierbei mit 23, die, die Rohrwand durchtrennende Lage des Innenhüllkreises mit 23' bezeichnet. In dieser Lage ist die Rohrwandung durch das sich drehende Werkzeug 16 vom Punkt 25 über den Punkt 20' bis zum Punkt 26 durchtrennt. Da sich das drehende Wirbelwerkzeug lediglich auf einer linearen Abwärtsbewegung um den Betrag $z_2$ befindet, findet noch nicht der eigentliche Wirbelvorgang, sondern nur der Einstechvorgang statt. Der eigentliche Wirbelvorgang, d. h. die Drehbewegung des Flugkreismittelpunktes 24' auf der Flugkreismittelpunktsbahn 27 setzt in diesem Fall erst nach dem Durchtrennen der Wandstärke s des Werkstücks 18 ein. Erst danach wandert der Flugkreismittelpunkt 24' auf der sogenannten Flugkreismittelpunktsbahn 27 in Pfeilrichtung 28. Dieser langsamen Wanderbewegung des sogenannten Flugkreismittelpunkts 24' auf der Flugkreismittelpunktsbahn 27 ist die ständige Drehbewegung des Wirbelwerkzeugs 16 in Pfeilrichtung 15 überlagert. Es findet demnach eine Abwälzbewegung des Innenhüllkreises 23' bzw. der Innenmantelfläche des Wirbelwerkzeugs 16 auf einer kreisförmigen Bahn 29 statt, die nahezu dem Innendurchmesser $d_i$ des Werkstücks 18 entspricht. Die Kreisbahn 29 ist etwas kleiner als der Innendurchmesser $d_i$, um ein tatsächliches Durchtrennen der Wandstärke s zu gewährleisten. Das Wirbelwerkzeug braucht demnach lediglich die Wandstärke s zu durchdringen und wälzt sich dann auf der Kreisbahn 29 ab, wobei der Flugkreismittelpunkt 24' auf der Flugkreismittelpunktsbahn 27 in Pfeilrichtung 28 wandert. Beispielsweise befindet sich der Innenhüllkreis in der Position 23", wenn der Flugkreismittelpunkt 24' um 90° bis in die Lage 24" gewandert ist. In diesem Fall ist die Außenmantelfläche des Werkstücks bereits bis zum Punkt 30 abgetrennt. Es findet demnach ein allmähliches Abschälen der Wandstärke des Werkstücks 18 statt (s. Fig. 3).

Wie in Fig. 4b - 4e dargestellt, soll die Wirbelbewegung erfindungsgemäß sofort mit der spanabhebenden Bearbeitung einsetzen, um ein vorteilhaftes tangentiales Eingleiten des Werkzeugs in das Werkstück zu ermöglichen.

Der zu Fig. 3 beschriebenen linearen Einstechbewegung des Wirbelwerkzeugs 16 mit Innenverzahnung 17 durch ein lineares Herabfahren um den Betrag $z_2$ zur Durchtrennung der Wandstärke s soll deshalb eine Wirbelbewegung gleich zu Beginn des Schneidvorgangs überlagert werden. Hierfür wird der Flugkreismittelpunkt 24 sofort nach der Berührung der Schneidzähne mit dem Werkstück (Punkt 20, 21) (Fig. 4b) nicht linear über die Strecke z, sondern in einer Kurvenform vom Punkt 24 auf der Kreisbahn 41 in Fig. 4b entlang der Kurve 31 zum Punkt 32 auf der Flugkreismittelpunktsbahn 27 geführt. Der linearen Einstechbewegung wird demzufolge sofort eine Wirbelbewegung überlagert, die eine optimale tangentiale Einstechbewegung in das Werkstück mit sich bringt. Hierdurch tauchen die Schneidzähne 33 noch sanfter und tangentialer in das Werkstück ein. Nach Erreichen des Punktes 32 auf der Flugkreismittelpunktsbahn 27, d. h. nach Durchfahren einer Abwälzbewegung um den Winkel $\alpha$, läuft der Flugkreismittelpunkt 24' weiter auf der Flugkreismittelpunktsbahn 27. Danach findet nur noch die eigentliche Wirbelbewegung statt.

In den Fig. 4b - 4d ist dieser Vorgang der überlagerten Einstich- und Wirbelbewegung entlang der Kurve 31 näher dargestellt. Fig. 4b zeigt die Ausgangslage zum Zeitpunkt der Berührung (Punkt 20, 21) zwischen Wirbelwerkzeug 16 und Werkstück 18. Der Flugkreismittelpunkt 24 befindet sich zu Beginn der Kurve 31 auf der Kreisbahn 41. Gleichzeitig mit dem weiteren Vorschub in Z-Richtung wandert der Flugkreismittelpunkt 24 entlang der Kurve 31 um einen Winkel $\alpha$.

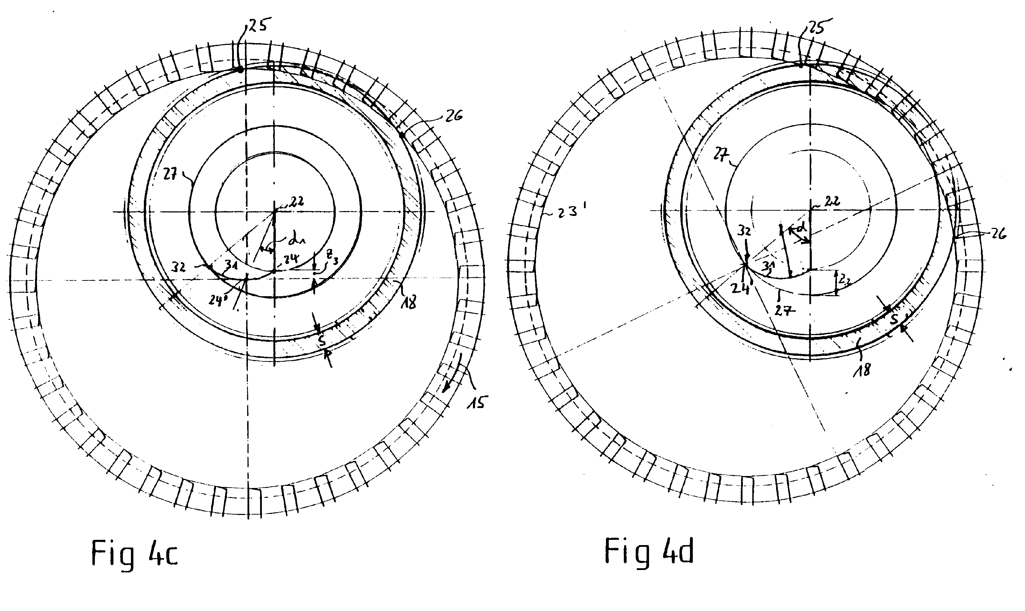

In Fig. 4c ist der Flugkreismittelpunkt 24' auf der Kurve 31 um den Winkel $\alpha_1$ und die Einstichstrecke $z_3$

gegenüber der Ausgangslage (Punkt 24) versetzt angeordnet. Hier taucht das sich drehende Wirbelwerkzeug im Punkt 25 in das Werkstück ein und im Punkt 26 aus dem Werkstück 18 heraus. Obwohl die Wandstärke s des Werkstücks noch nicht durchtrennt ist, hat demnach die Wirbelbewegung schon begonnen.

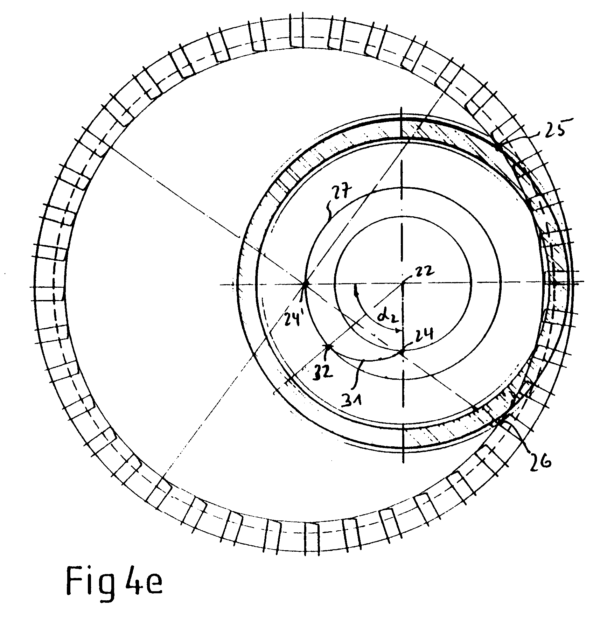

In Fig. 4d hat der Flugkreismittelpunkt 24' den Endpunkt 32 der Kurve 31 auf der Flugkreismittelpunktsbahn 27 erreicht und die Wandstärke $s = z_2$ des Werkstücks 18 vollständig durchtrennt. Ab diesem Zeitpunkt wandert der Flugkreismittelpunkt 24' auf der Flugkreismittelpunktsbahn 27, d. h. auf einer äquidistanten Bahn zum Mittelpunkt 22. In Fig. 4e ist eine weitere Stellung des Drehwinkels $\alpha_2 = 90°$ gezeigt. Hier ist der Flugkreismittelpunkt 24' um $\alpha_2 = 90°$ gewandert.

Wie aus Fig. 4a, 4b ersichtlich, ist die Kurve 31 als Kreisbogen mit dem Radius r ausgebildet. Die Endpunkte 31', 32 bestimmen sich wie zuvor beschrieben. Dabei beträgt der Winkel $\alpha$ (Punkt 32) ca. 30° - 60°, insbesondere 45°. Die Länge des Radius r entspricht etwa der Länge der Strecke $z_1$.

Der wirksame Einstechradius R des als Kreissägeblatt oder Wirbelfräswerkzeug mit Innenverzahnung ausgebildeten Wirbelwerkzeuges wird so groß gewählt, daß die Wandstärke des Rohres 18 ungehindert durchtrennt werden kann. Bei einem sehr dickwandigen Rohr oder einem Vollmaterial muß der Einstechradius R des Wirbelwerkzeuges so groß sein, daß dieses wenigstens die gesamte Wandstärke durchtrennt bzw. wenigstens bis zum Mittelpunkt 22 in das Vollmaterial im Wirbelverfahren eindringen kann. Auch die andere Hälfte des Vollmaterials wird im umlaufenden Wirbelverfahren abgetrennt. Im Gegensatz zu einem üblichen Kreissägeblatt mit Außenverzahnung braucht deshalb das Wirbelwerkzeug jeweils nur bis zur Durchtrennung der Wandstärke eines Rohres oder bis maximal zur Hälfte in das Werkstück eindringen.

Das Verfahren arbeitet umso wirksamer, je enger der Innendurchmesser $D_i$ des Werkzeugs an den Außendurchmesser $d_a$ des Werkstücks angepaßt ist, da so eine nahezu tangentiale Abwälzung gewährleistet ist. Dieses Verhältnis wird als E-Faktor bezeichnet, wobei $Di \sim 1{,}2 - 2 \times d_a$ ist.

In der Fig. 3 ist die Ausbildung der Schneidzähne näher dargestellt. In der unteren linken Hälfte der Fig. 3 sind hartmetallbestückte Schneidzähne 33' gezeigt, die aus rechteckförmigen oder trapezförmigen Hartmetallplättchen 34' bestehen, die in ihrer Länge radial, d. h. nach außen gerichtet, angeordnet sind. Die trapezförmige Formgebung hat den Vorteil, daß hierdurch beim Schneiden eine Schweißphase am Werkstück gebildet wird. Die rechteckige Zahnform entspricht der bloßen Umkehrung einer Außenverzahnung auf eine Innenverzahnung. Für eine Innenverzahnung eines Kreissägeblatts ist eine solche Anordnung nicht so vorteilhaft, da die Hartmetallplättchen nur mit ihrer kurzen Seitenkante b tangential an das Werkstück heranfahren, während die längere Seitenkante a weitgehend ohne Einfluß bleibt. Demzufolge ist in der Fig. 3 in der oberen Hälfte eine Innnenverzahnung 17 dargestellt, bei welcher die Hartmetallplättchen 34 mit ihrer Längskante a tangential an das Werkstück 18 heranfahren, während die kürzere Seitenkante b senkrecht hierzu steht. Die vordere Schneidkante 35 jedes Schneidzahnes 33 ist über die kürzere Seitenkante b zum Mittelpunkt 24' verlängert (siehe Linie 36). Gegenüber der Tangente 39 weist die längere Seitenkante a einen Freiwinkel $\alpha \simeq 30°$ auf. Die vorderen Schneidkanten 35 jedes Schneidzahns 33 sind in einem Winkel $\beta$ von 15° zueinander versetzt. Zwischen den Schneidzähnen 33 ist ein Spanraum 37 vorgesehen. In der Fig. 3 ist nur ein Teil der auf dem Innenschneidkreis 23, 23' angeordneten Schneidzähne dargestellt.

Der Innenhüllkreis 23, 23' ist gleichzeitig der Flugkreis für das Wirbelverfahren und bildet die innere Aussparung des als Sägeblatt mit Innenverzahnung ausgebildeten Wirbelwerkzeugs (Innenaussparung mit Radius r).

Die rechteckförmigen oder trapezförmigen Schneidzähne 33 sind nachfolgend gegeneinander verschränkt, um einen gewissen Freischnitt zu erzielen. Sie ragen über die Breite des Sägeblatts 16 hinaus, damit dieses nicht verklemmen kann. Bei trapezförmiger Zahnform entsteht eine Schweißphase, die z. B. ca. 30° betragen kann.

Die Erfindung ist nicht auf das dargestellte und beschriebene Ausführungsbeispiel beschränkt. Sie umfaßt auch vielmehr alle fachmännischen Ausgestaltungen und Weiterbildungen des erfindungsgemäßen Grundgedankens. Selbstverständlich kann auch das Werkstück eine Linear- oder Rotationsbewegung durchführen, um die Schneidbewegung zu vollziehen.

Das Durchtrennen des Werkstücks kann auch durch mehrfaches Eintauchen und Umlaufen des Werkzeugs erfolgen, d. h. beim Umkreisen des Werkzeugs auf der Flugkreismittelpunktsbahn können beliebige Schnittiefen eingestellt werden. Beim Mehrfachumkreisen sind dann mehrere Kurven 31 und entsprechende Flugkreismittelpunktsbahnen vorhanden.

In den Fig. 4a - 4e weist das Werkstück 18 einen inneren Kreis 42 und einen äußeren Kreis 43 als Tolernanzzugabe beim Durchtrennen des Werkstücks mit dem Außendurchmesser $d_a$ und dem Innendurchmesser $d_i$ auf.

## Patentansprüche

1. Verfahren zur Bearbeitung von Rundmaterial oder dergleichen im Wirbelverfahren mit einer Einspannvorrichtung (19, 19') für das Werkstück (18) und einem Wirbelgerät (1) zur spanabhebenden Bearbeitung, wobei das Werkstück (18) bezüglich seiner Längsmittelachse (22) stationär gehalten und das als kreisringförmiges Schneidwerkzeug mit einer innenliegenden Verzahnung (17, 33) ausgebildete Wirbelwerkzeug (16) auf einem, in einer senkrechten Ebene (38) zur Längsmittelachse (22) bewegbaren Kreuzschlitten (6) verfahrbar ist und eine Schnittbewegung des Wirbelwerkzeuges (16) aufgrund einer Verschiebung des Flugkreismittelpunkts (24, 24') auf einer Flugkreismittelpunktsbahn (27) erfolgt, dadurch gekennzeichnet, daß der linearen Einstechbewegung des Flugkreismittelpunktes (24) in das Werkstück (18) (Z-Achse) gleichzeitig eine Verschiebung des Flugkreismittelpunktes (24') längs einer Kurve (31) CNC-gesteuert überlagert ist, wobei die Kurve (31) die Flugkreismittelpunktsbahn (27) nach einem Drehwinkel $\alpha$ trifft.

2. Verfahren nach Anspruch 1, dadurch gekennzeichnet, daß der Flugkreismittelpunkt (24, 24') des Wirbelwerkzeugs (16) während des Eintauchens in das Werkstück (18) auf der Kurve (31) derart geführt ist, daß der Anfangspunkt (31') der Kurve (31) mit dem Flugkreismittelpunkt (24) des Wirbelwerkzeugs (16) zum Zeitpunkt der Berührung des Wirbelwerkzeugs (16) mit dem Werkstück (18) zusammenfällt (Fig. 4b) und der Endpunkt (32) der Kurve (31) auf der Flugkreismittelpunktsbahn (27) liegt, wobei der Flugkreismittelpunkt (24') einen Drehwinkel von $\alpha$ zurücklegt, währenddessen die gewünschte Einstichtiefe (z) oder eine Werkstückwanddurchtrennung erreicht wird.

3. Verfahren nach Anspruch 1 oder 2, dadurch gekennzeichnet, daß die Kurve (31) als Kreisbogen zwischen den Endpunkten (31', 32) ausgebildet ist, wobei der Kurvenradius (r) vorzugsweise etwa dem Exzentrizitätsabstand ($z_1$) entspricht.

4. Verfahren nach einem der Ansprüche 1 bis 3, dadurch gekennzeichnet, daß der Drehwinkel $\alpha \sim 30°$ bis 60° beträgt.

5. Verfahren nach Anspruch 1, dadurch gekennzeichnet, daß eine beliebige Kurve (31) mittels einer CNC-Steuerung programmgesteuert abgefahren wird.

6. Verfahren nach Anspruch 1, dadurch gekennzeichnet, daß der Innendurchmesser ($D_i$) des Werkzeugs (16) möglichst nahe beim Außendurchmesser ($d_a$) des Werkstücks (18) liegt und ca. das 1,2 bis 2-fache des Außendurchmessers $d_a$ des Werkstücks (16) beträgt (E-Faktor $D_i \sim 1{,}2 - 2 \times d_a$).

7. Verfahren nach Anspruch 1 oder 2, dadurch gekennzeichnet, daß ein mehrfaches Eintauchen entlang einer Kurve (31) und ein entsprechendes Umkreisen entlang einer Flugkreismittelpunktsbahn (27) zur Erzielung beliebiger Schnittiefen vorgesehen ist.

8. Verfahren nach Anspruch 1, dadurch gekennzeichnet, daß eine Innenverzahnung (17) aus in Seitenansicht rechteckförmigen oder trapezförmigen Hartmetall-Schneidelementen oder Hartmetall-Schneidplättchen (34, 34') Verwendung findet, deren längliche Seitenkante a in tangentialer und deren kürzere Seitenkante b in radialer Richtung zum Flugkreismittelpunkt (24) ausgerichtet sind.

9. Verfahren nach Anspruch 8, dadurch gekennzeichnet, daß vom Hartmetall-Schneidelement (34) mit seiner längeren Seitenkante a ein gegenüber der Tangente (39) versetzten Freiwinkel $\delta \cong 30°$ eingeschlossen ist.

10. Verfahren nach Anspruch 1, dadurch gekennzeichnet, daß die Schneidzähne (33) nachfolgend gegeneinander verschränkt sind und einen Schnitt erzeugen, der breiter ist als die Breite des Wirbelwerkzeugs (16).

## Claims

1. Method of machining round material or the like by orbital machining with a clamping device (19, 19') for the workpiece (18) and an orbital apparatus (1) for chip-removing machining, wherein the workpiece (18) is held stationarily with respect to its longitudinal central axis (22) and the orbiting tool (16), formed as an annular cutting tool with an internal set of teeth (17, 33), is traversable on a cross-slide (6) movable in a plane (38) perpendicular to the longitudinal central axis (22), and a cutting movement of the orbiting tool (16) takes place as a result of a displacement of the flight circle centre-point (24, 24') on a flight circle centre-point track (27), characterized in that, onto the linear infeed movement of the flight circle centre-point (24) into the workpiece (18) (Z-axis), a displacement of the flight circle centre-point (24') along a curve (31) is simultaneously superimposed under CNC control, the curve (31) meeting the flight circle centre-point track (27) after an angle of rotation $\alpha$.

**2.** Method according to Claim 1, characterized in that the flight circle centre-point (24, 24') of the orbiting tool (16) is guided during the penetration into the workpiece (18) on the curve (31) in such a manner that the starting point (31') of the curve (31) coincides with the flight circle centre-point (24) of the orbiting tool (16) at the instant of contact of the orbiting tool (16) with the workpiece (18) (Fig. 4b), and the end point (32) of the curve (31) lies on the flight circle centre-point track (27), the flight circle centre-point (24') travelling through an angle of rotation $\alpha$, during which the desired penetration depth (z) or a cut through the workpiece wall is achieved.

**3.** Method according to Claim 1 or 2, characterized in that the curve (31) is formed as a circular arc between the end points (31', 32), the curve radius (r) preferably being equal to approximately the eccentricity distance ($z_1$).

**4.** Method according to one of Claims 1 to 3, characterized in that the angle of rotation $\alpha$ is approximately 30° to 60°.

**5.** Method according to Claim 1, characterized in that any curve (31) can be travelled programme-controlled by means of a CNC control.

**6.** Method according to Claim 1, characterized in that the internal diameter ($D_i$) of the tool (16) lies as closely as possible to the external diameter ($d_a$) of the workpiece (18) and has a value of approximately 1.2 to 2 times the external diameter $d_a$ of the workpiece (16) (E-factor $D_i \sim 1.2 - 2 \times d_a$).

**7.** Method according to Claim 1 or 2, characterized in that a multiple penetration is provided along a curve (31) and a corresponding gyration along a flight circle centre-point track (27) for the purpose of achieving any cut depth desired.

**8.** Method according to Claim 1, characterized in that an internal set of teeth (17) composed of rectangular or trapezium-shaped (in lateral view) hard metal cutting elements or hard metal cutting plates (34, 34') is used, the longer side edge $\underline{a}$ of which is aligned in the tangential direction and the shorter side edge $\underline{b}$ of which is aligned in the radial direction relative to the flight circle centre-point (24).

**9.** Method according to Claim 8, characterized in that a clearance angle $\delta \cong 30°$ is enclosed between the longer side $\underline{a}$ of the hard metal cutting element (34) and the tangent (39).

**10.** Method according to Claim 1, characterized in that the cutting teeth (33) are successively twisted relative to one another and produce a cut that is wider than the width of the orbiting tool (16).

## Revendications

**1.** Procédé pour l'usinage de pièces rondes ou analogues, dans le procédé à tourbillonnement, comportant un dispositif de serrage (19,19') pour la pièce à usiner (18) et un appareil à tourbillonnement (1) pour un usinage par enlèvement de copeaux, la pièce à usiner (18) étant maintenue stationnaire en ce qui concerne son axe central longitudinal (22), et l'outil à tourbillonnement (16), réalisé sous forme d'un outil de découpe, en forme d'anneau circulaire, qui est muni d'une denture interne (17,33), pouvant se déplacer sur un chariot (6), à deux mouvements perpendiculaires, mobile dans un plan (38) perpendiculaire à l'axe central longitudinal (22), et un mouvement de découpe de l'outil à tourbillonnement (16) étant obtenu par un déplacement du centre de l'outil (24,24') sur une trajectoire de centre d'outil (27),
caractérisé en ce qu'un déplacement du centre de l'outil (24'), le long d'une courbe (31), commandé de façon numérique par calculateur, est superposé simultanément au mouvement linéaire d'entaillage du centre de l'outil (24) dans la pièce à usiner (18) (axe Z), la courbe (31) atteignant la trajectoire de centre d'outil (27) après un écart angulaire $\alpha$.

**2.** Procédé selon la revendication 1,
caractérisé en ce que le centre (24,24') de l'outil à tourbillonnement (16) est guidé, pendant l'introduction dans la pièce à usiner (18), sur la courbe (31) de sorte que le point de départ (31') de la courbe (31) coïncide avec le centre (24) de l'outil à tourbillonnement (16) au moment du contact de l'outil à tourbillonnement (16) avec la pièce à usiner (18) (figure 4b), et le point final (32) de la courbe (31) se trouve sur la trajectoire de centre d'outil (27), le centre de l'outil (24') se déplaçant d'un écart angulaire $\alpha$ pendant que la profondeur d'introduction souhaitée (z), ou un perçage de la paroi de la pièce à usiner, est obtenue.

**3.** Procédé selon l'une des revendications 1 ou 2,
caractérisé en ce que la courbe (31) est réalisée sous forme d'un arc de cercle entre les points extrêmes (31',32), le rayon de courbure (r) correspondant de préférence à peu près à l'écart d'excentricité ($z_1$).

**4.** Procédé selon l'une des revendications 1 à 3,
caractérisé en ce que l'écart angulaire $\alpha$ vaut $\sim$30° à 60°.

**5.** Procédé selon la revendication 1,
caractérisé en ce qu'une courbe quelconque (31) est parcourue au moyen d'une commande numérique par calculateur.

**6.** Procédé selon la revendication 1,
caractérisé en ce que le diamètre interne ($D_i$) de l'outil (16) se trouve le plus près possible du diamètre externe ($d_a$) de la pièce à usiner (18) et vaut environ 1,2 à 2 fois le diamètre externe $d_a$ de la pièce à usiner (18)

$$(\text{Facteur E } D_i \sim 1{,}2 - 2 \times d_a).$$

**7.** Procédé selon l'une des revendications 1 ou 2,
caractérisé en ce que l'on prévoit une introduction multiple le long d'une courbe (31) et une rotation correspondante le long d'une trajectoire de centre d'outil (27), pour obtenir des profondeurs de découpe quelconques.

**8.** Procédé selon la revendication 1, caractérisé en ce qu'une denture interne (17), constituée d'éléments de découpe en métal dur ou de plaquettes de découpe (34,34') en métal dur, de forme rectangulaire ou trapézoïdale en vue latérale, est utilisée, denture dont le bord latéral a le plus long est dirigé en direction tangentielle et le bord latéral b le plus court est dirigé en direction radiale, par rapport au centre de l'outil (24).

**9.** Procédé selon la revendication 8,
caractérisé en ce qu'un angle de dépouille $\delta \cong 30°$, déplacé par rapport à la tangente (39), est englobé par l'élément de découpe (34) en métal dur avec son bord latéral a le plus long.

**10.** Procédé selon la revendication 1,
caractérisé en ce que les dents de découpe consécutives (33) sont décalées les unes par rapport aux autres et engendrent une découpe qui est plus large que la largeur de l'outil à tourbillonnement (16).

Fig.1
Fig.2

15
16
20,21
23"
39
δ
23
26
20'
23'
25
β
29
37
36
22
24'''
$d_i$
33
35
$d_a$
36
17
18
s
α
34
a
b
27
31
24
$z_2$
32
28
24'
30
23"
33'
36
R
23
23'
34'
b
a
r
15
16

Fig.3

20,21
18
22
24
31'
31
41
32
27
40
16
23
17
20
21
22,24
42
43


Fig 4b

Fig 4a

Fig 4d

Fig 4c

25
26
22
24
31
27
32
24'

Fig 4e